Europäisches Patentamt

European Patent Office

Office européen des brevets

(11) Numéro de publication: **0 246 681**
**A1**

## (12) DEMANDE DE BREVET EUROPEEN

(21) Numéro de dépôt: 87200710.9

(22) Date de dépôt: **14.04.87**

(51) Int. Cl.⁴: **B29C 59/14** , B32B 27/30 , B32B 31/22 , B29C 71/04

(30) Priorité: 24.04.86 FR 8606080

(43) Date de publication de la demande:
**25.11.87 Bulletin 87/48**

(84) Etats contractants désignés:
**AT BE CH DE ES FR GB IT LI NL SE**

(71) Demandeur: **SOLVAY & Cie (Société Anonyme)**
**Rue du Prince Albert, 33**
**B-1050 Bruxelles(BE)**

(72) Inventeur: **Dalle Vedove, Walter**
**Place de la Petite Suisse, 17**
**B-1050 Bruxelles(BE)**

(54) **Feuille composite pour le revêtement étanche d'éléments de construction et procédé pour sa fabrication.**

(57) Feuille composite pour le revêtement étanche d'éléments de construction recouverts d'un matériau hydrocarboné hydrofuge (par exemple, bitume ou polystyrène expansé), comprenant au moins deux couches superposées à base de polychlorure de vinyle souple dont la surface de la couche destinée à être posée sur le matériau hydrocarboné est soumise à un traitement par plasma froid.

EP 0 246 681 A1

## Feuille composite pour le revêtement étanche d'éléments de construction et procédé pour sa fabrication

La présente invention concerne une feuille composite pour le revêtement étanche d'éléments de construction recouverts d'un matériau hydrocarboné hydrofuge. Elle concerne plus particulièrement une feuille composite pour le revêtement étanche d'éléments de toitures recouverts d'un matériau à base de bitume ou de polystyrène expansé. Elle concerne également un procédé pour la fabrication de pareilles feuilles composites.

Le revêtement étanche d'éléments de construction soumis de manière continue aux effets des agents atmosphériques (pluie, neige, soleil, vent ...) est assuré actuellement dans une large mesure par des feuilles en matériaux thermoplastiques imperméables et résistant plus ou moins bien aux intempéries et à l'action prolongée des rayons ultra-violets. Le plus souvent, il s'agit de feuilles à base de polychlorure de vinyle souple qui présentent à la fois la résistance et la souplesse requises pour cet usage.

Les feuilles à base de polychlorure de vinyle souple étaient toutefois inutilisables jusqu'à présent pour le revêtement d'éléments de construction recouverts de matériaux hydrocarbonés hydrofuges, tels que des matériaux à base de bitume, de goudron, d'asphalte ainsi que des matériaux à base de polystyrène expansé.

Ces feuilles à base de polychlorure de vinyle souple contiennent en effet une quantité relativement importante d'un plastifiant, qui est le plus souvent un ester organique assez volatil, et qui est progressivement extrait de ces feuilles par lesdits matériaux hydrocarbonés. Ces feuilles deviennent dès lors dures et cassantes, se fissurent et ne peuvent plus du tout assurer l'étanchéité des éléments de construction qu'elles recouvrent (demande de brevet DE-A-1184481 de KALLE, colonne 1, lignes 1 à 18).

Il a déjà été tenté de remédier à cet inconvénient de nombreuses façons. Ainsi, on a proposé de remplacer au moins une partie du polychlorure de vinyle de ces feuilles par du polyéthylène chloré (demande de brevet sus-mentionnée). Cette tentative, impliquant la fabrication et le mélange de deux types de polymères différents, dont le second (polyéthylène) doit en outre être modifié par chloration, est coûteuse et ne s'est pas révélée totalement satisfaisante. Il a aussi été tenté de remplacer les plastifiants monomériques du polychlorure de vinyle, qui sont le plus souvent des esters dérivés d'alcools monohydriques par des plastifiants polymériques dérivés d'acides organiques dicarboxyliques et d'alcools polyhydriques tels que les propylène-et butylèneglycols (H.A. Sarvetnick, Polyvinyl Chloride, Reinhold Plastics Applications Series, Van Nostrand Reinhold Company, 1969, page 70).

Si ces plastifiants polymériques sont moins volatils et ont une moindre tendance à l'extraction que les plastifiants monomériques, il s'agit de produits coûteux dont l'efficacité est moindre et qui conduisent donc à des produits moins flexibles et moins résistants (op. cit., pages 70 et 71).

Il a également été fait appel, pour résoudre le problème de l'extraction du plastifiant par les matériaux hydrocarbonés, à des méthodes évitant le contact direct de la feuille à base de polychlorure de vinyle souple avec ces matériaux. C'est ainsi qu'on a par exemple associé par laminage à chaud des feutres de natures diverses avec la face de la feuille destinée à être mise en contact avec le matériau hydrocarboné; on a aussi revêtu la face de la feuille, destinée à être mise en contact avec le matériau hydrocarboné, de vernis à base de résines acryliques, de polyesters ou de polymères fluorés. Ces méthodes ne se sont pas non plus révélées tout à fait satisfaisantes parce que le feutre interposé ou le vernis de revêtement engendre lui-même une extraction du plastifiant (op. cit., page 72) ou ne s'oppose pas suffisamment à cette extraction.

Il a aussi été tenté de pallier les inconvénients résultant de l'extraction progressive du plastifiant des feuilles à base de polychlorure de vinyle souple par les matériaux de recouvrement hydrocarbonés en mettant en oeuvre des techniques faisant appel à des traitements spéciaux de la surface de ces feuilles (demande de brevet DE-A-1184481 sus-mentionnée, colonne 1, lignes 19-21).

Ces techniques ont toutefois été écartées également parce que l'amélioration induite n'implique qu'une couche superficielle extrêmement fine de la feuille et disparaît dès lors rapidement avec l'endommagement de cette couche par des agents chimiques ou mécaniques (idem, colonne 1, lignes 22 à 27).

La présente invention vise à fournir des feuilles à base de polychlorure de vinyle souple qui conviennent au revêtement d'éléments de construction recouverts de matériaux hydrocarbonés hydrofuges, c'est-à-dire principalement de matériaux à base de bitume, de goudron et d'asphalte et de matériaux à base de polystyrène expansé, sans présenter les inconvénients précités.

L'invention concerne dès lors une feuille composite pour le revêtement étanche d'éléments de construction recouverts d'un matériau hydrocarboné hydrofuge, comprenant au moins deux couches superposées à base de polychlorure de vinyle souple dont la surface de la couche destinée à être posée sur le matériau hydrocarboné est soumise à un traitement par plasma froid.

Le polychlorure de vinyle entrant dans la composition des couches de la feuille composite selon l'invention peut être choisi parmi les homopolymères du chlorure de vinyle ou les copolymères contenant une proportion prépondérante (supérieure à 50 % en poids) de ce monomère. Ces copolymères sont obtenus par copolymérisation du chlorure de vinyle avec un ou plusieurs monomères copolymérisables tels que les esters vinyliques, par exemple l'acétage de vinyle; les éthers vinyliques, par exemple l'éther éthylvinylique; les acides acrylique et méthacrylique et leurs esters, par exemple l'acrylate de méthyle; l'acide fumarique et ses esters, par exemple le fumarate d'éthyle; l'acide maléique, son anhydride et ses esters par exemple le maléate d'éthyle; les composés vinylaromatiques, par exemple le styrène, les halogénures de vinylidène par exemple le chlorure de vinylidène; l'acrylonitrile; le méthacrylonitrile; les oléfines, par exemple l'éthylène.

Le polychlorure de vinyle entrant dans la composition des couches de la feuille composite selon l'invention peut aussi être constitué d'un mélange de polymères, en particulier d'un mélange de polymères du chlorure de vinyle avec un élastomère synthétique tel que les copolymères de l'éthylène et de l'acétate de vinyle; les copolymères de l'acrylonitrile et du butadiène; les copolymères du styrène et de l'acrylonitrile; les copolymères du méthacrylate de méthyle, du styrène et du butadiène; les copolymères de l'acrylonitrile, du styrène et du butadiène; les polyamides; les polymères du caprolactame; les terpolymères de l'éthylène, du propylène et d'un diène; les élastomères d'uréthanes; les polybutadiènes modifiés par des résines époxydes; la proportion d'élastomère synthétique dans le mélange n'excède toutefois pas 50 % en poids par rapport au poids de polymère du chlorure de vinyle.

Les couches de la feuille composite selon l'invention peuvent être à base de polychlorures de vinyle différents ou, de préférence, à base du même polychlorure de vinyle.

Chaque couche de la feuille composite selon l'invention contient aussi un plastifiant conventionnel du polychlorure de vinyle, de manière à conférer à la feuille la flexibilité souhaitée. Ce plastifiant est choisi en général parmi les esters de l'acide phtalique, tels que le dibutyl-, le dioctyl-, le diisodécyl-et le butylbenzylphtalate par exemple; parmi les esters de diacides aliphatiques, tels que le dioctylfumarate, le dioctyladipate et le dibutylsébacate par exemple; parmi les esters de polyols, tels que les esters du pentaérythritol et les dibenzoates de diéthylène-et de dipropylèneglycols par exemple; parmi les esters d'acides gras, tels que l'acétylricinoléate de méthyle par exemple; parmi les esters de l'acide phosphorique, tels que le tricrésyl-, le triphényl-et le trinonylphosphate par exemple; parmi les huiles époxydées, telles que les huiles de soja et de lin époxydées par exemple; parmi les esters de l'acide citrique, tels que les citrates d'acétyltrioctyle et d'acétyltributyle par exemple; ou encore parmi les plastifiants à base de polyesters, tels que le trimellitate de triméthyle, le pyromellitate de tétra-n-octyle et l'adipate de propylèneglycol par exemple.

Pour des raisons d'accessibilité et de coût, le plastifiant est choisi de préférence parmi les esters de l'acide phtalique et parmi les esters de diacides aliphatiques, en particulier le dioctyl-et le diisodécylphtalate, d'une part et les dioctylfumarate et -adipate, d'autre part.

Chaque couche de la feuille composite selon l'invention peut contenir un ou plusieurs des plastifiants énumérés ci-dessus en des proportions comprises en général entre 10 et 90 parties pour 100 parties en poids de polychlorure de vinyle, de préférence entre 30 et 75 parties pour 100 parties en poids de polychlorure de vinyle. De préférence, les couches de la feuille composite contiennent chacune approximativement la même proportion du (ou des) même(s) plastifiant(s).

Selon l'invention, on peut aussi incorporer d'autres additifs conventionnels pour améliorer diverses propriétés de la feuille composite, telles que la résistance aux agents atmosphériques et aux intempéries, la stabilité, faciliter sa fabrication, réduire son coût, etc. Parmi ces additifs conventionnels, on peut citer :

-les stabilisants thermiques, tels que les sels métalliques d'acides carboxyliques, par exemple les stéarates de calcium, de baryum et de zinc; les composés du plomb, par exemple le sulfate et le phosphite; les composés organiques de l'étain, par exemple le dilaurate de dibutylétain et le maléate de dioctylétain;

-les lubrifiants et agents antistatiques, tels que les acides gras supérieurs, leurs esters et amides, par exemple le stéarate de butyle et l'éthylène bisstéaroamide; les cires de polyéthylène;

-les charges, telles que le carbonate de calcium, l'asbeste, les silices, le talc, etc;

-les agents ignifugeants, tels que l'oxyde d'antimoine, les esters phosphorés, etc;

-les stabilisants à la lumière, tels que les benzophénones, par exemple la 2,4-dihydroxybenzophénone; les benzotriazoles, par exemple le 2(2′-hydroxy-5-méthylphényl)benzotriazole; les pigments, par exemple le dioxyde de titane et le noir de carbone qui peuvent aussi améliorer la stabilité à la lumière;
-d'autres additifs connus, tels que des colorants, des agents fongicides, des antioxydants, etc.

D'autres précisions sur la nature et la fonction des divers additifs conventionnels que peut contenir la feuille composite selon l'invention ainsi que les proportions dans lesquelles ils peuvent être présents sont mentionnées dans les chapitres 6 et 7 de l'ouvrage de H.A. Sarvetnick, "Polyvinyl Chloride", mentionné plus haut (pages 88 à 137), incorporés par référence dans la présente description.

La feuille composite selon l'invention est fabriquée en assemblant les couches dont la composition a été décrite ci-dessus, façonnées elles-mêmes par n'importe quelle méthode conventionnelle telle que le moulage par extrusion, le calandrage, le moulage par compression, le thermoformage, etc.

L'assemblage des couches superposées constitutives de la feuille composite selon l'invention peut être réalisé par toute méthode généralement connue à cet effet, et en particulier par doublage ou laminage desdites couches avec application de chaleur et de pression.

La feuille composite ainsi obtenue comprend au moins deux couches superposées; la couche destinée à être posée sur le susdit matériau hydrocarboné (appelée ci-après aussi "couche traitée") présente en général une épaisseur de l'ordre de la fraction de millimètre; la ou les couches avec laquelle (lesquelles) cette couche est assemblée présente(nt) en général une épaisseur comprise entre une fraction de millimètre et quelques millimètres.

De préférence, la feuille composite selon l'invention est constituée de deux couches dont la couche traitée présente une épaisseur de l'ordre de 0,05 à 1,5 mm, plus particulièrement de l'ordre de 0,1 à 0,8 mm et dont la seconde couche présente une épaisseur de l'ordre de 0,1 à 5 mm, plus particulièrement de l'ordre de 0,5 à 1,5 mm.

Selon l'invention, la surface de la couche de la feuille composite destinée à être posée sur le matériau hydrocarboné est soumise à un traitement par plasma froid. Ce traitement consiste à exposer ladite surface à une atmosphère de plasma à basse température de gaz inorganique. Pareil traitement peut être effectué, en discontinu ou en continu, dans une chambre à plasma équipée intérieurement d'électrodes y générant un plasma à basse température sous pression réduite par décharge luminescente, produite sous potentiel de décharge entre les électrodes, dans le gaz inorganique.

Le gaz inorganique en présence duquel le plasma à basse température est généré est choisi en général parmi l'hélium, le néon, l'argon, l'azote, l'oxygène, l'air, l'oxyde nitreux, le dioxyde d'azote, les mono-et dioxyde de carbone, le dioxyde de soufre, le sulfure d'hydrogène, l'hydrogène, le chlore, le fluor et le chlorure d'hydrogène. Ces gaz peuvent être utilisés seuls ou en mélanges. Parmi les gaz énumérés ci-dessus, l'argon et le monoxyde de carbone sont particulièrement préférés.

La pression dans la chambre à plasma est généralement comprise entre 0,001 et 10 Torr, de préférence entre 0,01 et 5 Torr, afin d'assurer la stabilité de la décharge luminescente, obtenue par application d'une puissance électrique généralement comprise entre 10 W et 500 kW, sous une fréquence généralement comprise entre 50 Hz et 2,5 GHz, entre les électrodes.

La plage des fréquences pour la décharge électrique n'est pas limitée à la zone des hautes fréquences indiquée ci-dessus mais peut s'étendre au courant direct, à basse fréquence ou à microondes.

L'appareil générateur de plasma n'est pas limité à ceux comprenant une chambre équipée intérieurement d'électrodes, mais peut être du type à électrodes extérieures ou à électrode bobinée. Les électrodes peuvent être reliées à un générateur à haute fréquence par couplage capacitif ou inductif. La forme des électrodes n'est pas particulièrement critique; l'électrode de puissance et l'électrode mise à la terre peuvent avoir la même forme ou des formes différentes, telles que des plaques, des tiges, des anneaux, des cylindres, etc. Il est fréquemment souhaitable que les murs intérieurs de la chambre à plasma soient métalliques pour exercer la fonction d'électrode, le plus souvent mise à la terre.

En tout état de cause, le traitement par plasma froid est conduit de manière à ce que la chaleur dégagée par la décharge électrique n'endommage pas la surface de la couche de la feuille composite qui y est soumis.

Le traitement par plasma froid de la couche de la feuille composite destinée à être posée sur le matériau hydrocarboné peut être effectué avant, pendant ou après assemblage des couches constitutives de ladite feuille. On a constaté que pour éviter des problèmes d'assemblage, il est préférable de procéder au traitement par plasma froid de la couche en cause après l'assemblage des couches constitutives de la feuille composite. Il peut être préférable aussi d'éviter tout effet du traitement plasma sur la surface de la feuille opposée à la surface traitée, notamment dans le cas de l'assemblage des feuilles par collage. On peut pour ce faire protéger ladite surface au cours du traitement plasma par n'importe quel moyen approprié, tel l'interposition d'une feuille de masquage, etc.

Afin d'améliorer l'efficacité du traitement par plasma froid et donc de diminuer encore le phénomène d'extraction du plastifiant, la couche traitée peut contenir un additif propre à améliorer les propriétés conférées par le traitement par plasma froid. Cet additif est choisi généralement parmi les agents accélérant la réticulation superficielle provoquée par le traitement par plasma froid et plus particulièrement parmi les agents de réticulation conventionnels. Les agents de réticulation généralement utilisés sont les organosilanes réticulables, les composés contenant des groupes allyliques et les esters des acides acrylique et méthacrylique.

Des exemples d'organosilanes réticulables sont les trialkoxysilanes, tels que le triméthoxy-, le triéthoxy-et le glycydoxypropyltriméthoxysilane.

Des exemples de composés contenant des groupes allyliques sont les esters di-et triallyliques, tels que les fumarate, phtalate et sébacate de diallyle et le cyanurate de triallyle.

Des exemples d'esters d'acides acrylique et méthacrylique sont les acrylates et méthacrylates de méthyle et de lauryle, les diméthacrylates de tri-, de tétra-et polyéthylèneglycol, le triméthacrylate de triméthylolpropane et le tétraacrylate de tétraméthylolméthane.

Des agents de réticulation efficaces et préférés sont les esters d'acide (méth)acrylique.

L'utilisation de plusieurs agents réticulants différents entre également dans le cadre de l'invention.

L'agent accélérant la réticulation superficielle est généralement incorporé dans la composition de la couche traitée à raison de 0,1 à 30 % en poids par rapport au poids de polychlorure de vinyle, de préférence à raison de 0,5 à 10 % en poids. Avec les agents de réticulation les plus efficaces (esters d'acide (méth)acrylique) et tout particulièrement avec le tétraacrylate de tétraméthylolméthane, il a été constaté que des quantités faibles, de l'ordre de 0,5 à 1,5 % en poids, par rapport au poids de polychlorure de vinyle dans la couche traitée sont préférables, pour éviter toute réticulation superficielle parasite qu'un excès d'agent de réticulation engendre, sur la face extérieure de la couche de la feuille d'étanchéité non traitée par plasma froid.

Il a aussi été constaté que l'efficacité du traitement par plasma froid est encore améliorée si la composition de la couche traitée est substantiellement exempte d'autres ingrédients (additifs conventionnels) que le polychlorure de vinyle, le plastifiant, le(s) stabilisant(s) ainsi que l'éventuel agent de réticulation. On entend par "couche traitée dont la composition est substantiellement exempte d'autres ingrédients", une couche traitée contenant moins de 30 % en poids, par rapport au poids total de la couche, des autres additifs conventionnels énumérés plus haut.

Les feuilles composites selon l'invention sont destinées au revêtement étanche d'éléments de construction recouverts d'un matériau hydrocarboné hydrofuge. A cet effet, elles peuvent être posées sur les éléments de construction à revêtir soit par contact direct, soit de préférence avec interposition d'un feutre de nature quelconque, par exemple un feutre à base de polyester. On peut rendre ce feutre solidaire de la feuille composite par tout moyen connu. On peut par exemple associer la feuille composite et le feutre en enduisant d'un adhésif, tel qu'un adhésif conventionnel à base de copolymères acryliques, la surface de la couche traitée de la feuille et en procédant ensuite au doublage du feutre et de la feuille. Les feuilles composites peuvent être simplement posées sur les éléments de construction à revêtir et éventuellement assemblées entre elles par collage au moyen d'adhésifs, tels que des résines époxydes; par soudage à chaud; par soudage à haute fréquence; etc. Cet assemblage peut se faire bord à bord, par exemple avec recouvrement des bords jointifs au moyen d'une bande ou d'un lé qui peut avoir par exemple la même composition que la couche de la feuille composite non soumise au traitement par plasma froid. Cet assemblage peut également se faire par recouvrement des bords respectifs de deux feuilles adjacentes. Dans ce cas, le traitement par plasma froid de la couche des feuilles destinée à être posée sur le matériau hydrocarboné n'est effectué de préférence que sur les parties de leurs surfaces qui ne sont pas en contact entre elles.

Les feuilles composites selon l'invention peuvent convenir au revêtement étanche de n'importe quel élément de construction recouvert d'un matériau hydrocarboné hydrofuge, tel que des éléments d'ouvrages de génie civil, comme par exemple des digues, ponts, canaux, tunnels, etc; tel que des fondations, etc; elles conviennent particulièrement bien au revêtement étanche de toitures de bâtiments recouvertes de matériaux à base de bitume et de matériaux à base de polystyrène expansé.

Les feuilles composites selon l'invention peuvent être renforcées par des armatures conventionnelles, telles que des armatures en fibres de verre, en fibres de polyester, etc.

L'invention est illustrée par les exemples non limitatifs ci-après.

## Exemple 1

On prépare un film (A) par calandrage d'une composition comprenant

(a) 100 parties en poids d'un homopolymère de chlorure de vinyle;

(b) 68 parties en poids de diisodécylphtalate;

(c) 4 parties en poids d'un système stabilisant contenant du baryum, du cadmium et du plomb;

(d) 10 parties en poids de carbonate de calcium;

(e) 3 parties en poids d'un système ignifugeant à base d'antimoine;

(f) 1 partie en poids d'un agent fongicide (oxy-biphénoxy-arsine)

(g) 8,5 parties en poids de pigments à base de dioxyde de titane et de noir de carbone.

On prépare un autre film (B) par calandrage d'une composition comprenant les ingrédients (a), (b) et (c) dans les mêmes proportions que dans la composition destinée à préparer le film (A) ci-dessus et, en outre, 1 partie en poids de tétraacrylate de tétraméthylolméthane (h).

Les films (A) et (B) sont assemblés par laminage à chaud pour former une feuille composite à deux couches superposées d'épaisseurs respectives de 1,5 mm (couche (A)) et de 0,12 mm (couche (B)).

La face externe de la couche (B) de la feuille composite est ensuite soumise à un traitement par plasma froid généré dans la chambre à plasma d'un appareil générateur de plasma à basse température par application d'un courant électrique d'une puissance de 40 kW sous une fréquence de 110 kHz, l'atmosphère de la chambre à plasma étant maintenue à une pression de $4.10^{-2}$ Torr avec admission et décharge continue d'un mélange gazeux comprenant un mélange équimoléculaire de CO et d'argon.

Le traitement continu par plasma froid est effectué à la vitesse de 30m/min.

La résistance à l'extraction du plastifiant de la feuille composite ainsi obtenue et traitée, et déposée ensuite sur du bitume chaud, est mesurée après un test accéléré de 28 jours à 70°C (selon la norme DIN 16726).

La teneur résiduelle en plastifiant s'élève à 97 % de la teneur en plastifiant d'origine.

## Exemple 2

On prépare 1 film (B') de composition identique à celle du film (B) de l'exemple 1, d'une épaisseur de 0,69 mm.

On prépare 1 film (A') de composition identique à celle du film (A) de l'exemple 1 et d'une épaisseur égale à 0,89 mm.

Le film (B') est laminé à chaud sur le film A', entre les cylindres 3 et 4 au moment du calandrage du film A'. On obtient un film d'une épaisseur totale de 1,5 mm.

La face externe de la couche (B') de la feuille composite est ensuite soumise à un traitement par plasma froid généré dans la chambre à plasma d'un appareil générateur de plasma à basse température par application d'un courant électrique d'une puissance de 40 kW sous une fréquence de 110 kHz, l'atmosphère de la chambre à plasma étant maintenue à une pression de $4.10^{-2}$ Torr avec admission et décharge continue d'un mélange gazeux comprenant un mélange équimoléculaire de CO et d'argon.

Le traitement continu par plasma froid est effectué à la vitesse de 15m/min.

La résistance à l'extraction du plastifiant de la feuille composite ainsi obtenue et traitée, et déposée ensuite sur du bitume chaud, est mesurée après un test accéléré de 28 jours à 70°C (selon la norme DIN 16726).

La teneur résiduelle en plastifiant s'élève à 97 % de la teneur en plastifiant d'origine.

## Exemple 3

On reproduit l'exemple 1 sauf que l'on n'incorpore pas l'ingrédient (h) dans la composition destinée à préparer le film (B).

La teneur résiduelle en plastifiant s'élève à 88 % de la teneur en plastifiant à l'origine.

## Exemple 4

Cet exemple est donné à titre de comparaison.

On soumet au test accéléré d'extraction du plastifiant mentionné à l'exemple 1, une feuille calandrée constituée exclusivement du film (A).

A l'issue de ce test, la teneur résiduelle en plastifiant de la feuille ne s'élève qu'à 45 % de la teneur initiale.

## Exemple 5

Cet exemple est donné à titre de comparaison.

On soumet au test accéléré d'extraction du plastifiant mentionné à l'exemple 1, la feuille calandrée mentionné à l'exemple 4, qui a été soumise préalablement au traitement par plasma dans les conditions décrites à l'exemple 1.

A l'issue de ce test, la teneur résiduelle en plastifiant de la feuille ne s'élève qu'à 60 % de la teneur initiale.

**Revendications**

1 - Feuille composite pour le revêtement étanche d'éléments de construction recouverts d'un matériau hydrocarboné hydrofuge, comprenant au moins deux couches superposées à base de polychlorure de vinyle souple, caractérisée en ce que la surface de la couche destinée à être posée sur le matériau hydrocarboné est soumise à un traitement par plasma froid.

2 - Feuille composite selon la revendication 1, caractérisée en ce que la couche dont la surface est soumise au traitement par plasma froid contient un agent de réticulation.

3 - Feuille composite selon la revendication 2, caractérisée en ce que l'agent de réticulation est choisi parmi les organosilanes réticulables, les composés contenant des groupes allyliques et les esters des acides acrylique et méthacrylique.

4 - Feuille composite selon l'une des revendications 1 à 3, caractérisée en ce que la couche dont la surface est soumise au traitement par plasma froid contient de 0,5 à 1,5 % en poids, par rapport au poids de polychlorure de vinyle, de tétraacrylate de tétraméthylolméthane.

5 - Feuille composite selon l'une des revendications 1 à 4, caractérisée en ce que la couche dont la surface est soumise au traitement par plasma froid est substantiellement exempte d'autres ingrédients que le polychlorure de vinyle, le plastifiant et l'éventuel agent de réticulation.

6 - Procédé pour la fabrication d'une feuille composite selon l'une des revendications 1 à 5, caractérisée en ce qu'on assemble les couches superposées constitutives de ladite feuille par laminage desdites couches avec application de chaleur et de pression.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | GB-A-2 052 525 (SHIN-ETSU CHEMICAL CO.) <br> * Page 1, lignes 54-62; revendication 1 * | 1,2 | B 29 C 59/14 <br> B 32 B 27/30 <br> B 32 B 31/22 <br> B 29 C 71/04 |
| A | * Page 2, lignes 17-25 * | 3 | |
| | --- | | |
| A | US-A-4 337 768 (TORAY IND.) <br> * Colonne 2, lignes 1-15; colonne 4, lignes 13-39 * | 1 | |
| | ----- | | |

| | DOMAINES TECHNIQUES RECHERCHES (Int. Cl.4) |
|---|---|
| | B 29 C <br> B 32 B |

Le present rapport de recherche a été établi pour toutes les revendications

| Lieu de la recherche | Date d'achèvement de la recherche | Examinateur |
|---|---|---|
| LA HAYE | 26-06-1987 | VAN THIELEN J.B. |